# EUROPEAN PATENT APPLICATION

(11) **EP 3 932 641 A1**
(43) Date of publication of application: **05.01.2022**
(21) Application number: 20763388.4
(22) Date of filing: 19.02.2020
(51) Int. Cl.: B29B 11/16, B29K 105/08, B29C 70/18, B29C 70/34, B29C 70/54

(54) **SHEET MATERIAL PRESSING DEVICE, SHEET MATERIAL PRESSING METHOD, PRESSING ROLLER, AND METHOD FOR MANUFACTURING SHEET MATERIAL**

(30) Priority: 25.02.2019 JP 2019031310
(71) Applicant: DIC Corporation, Tokyo 174-8520 (JP)
(72) Inventor: NAKATA, Naoki, Chiba 285-8668 (JP)
(74) Representative: Beckmann, Claus
(86) International application number: PCT/JP2020/006495
(87) International publication number: WO 2020/175266

(57) **Abstract**

[Problem] There are provided a sheet material pressing device, a sheet material pressing method, and a pressing roller, which can obtain a high defoaming effect while ensuring a desired impregnation effect.

[Means for Resolution] A sheet material pressing device 14 includes: a pressing roller 17 having a plurality of free rollers 15 for pressing a sheet material 13 in which resin and fibers are mixed, and a free roller support unit 16 disposes the plurality of free rollers 15 in an annular shape and fixes and supports the plurality of free rollers 15 so as to rotate freely; a driving control unit that rotates the free roller support unit 16 in a first rotation direction R in order to revolve the plurality of free rollers 15; and a sheet material conveying unit 3 on which the sheet material 13 is placed and conveyed. The first rotation direction R is a direction in which a moving direction of the free roller 15 at a pressing position of the sheet material 13 is a direction opposite to a conveying direction T of the sheet material 13.

## Description

### Technical Field

The present invention relates to a sheet material pressing device, a sheet material pressing method, a pressing roller, and a sheet material manufacturing method.

### Background Art

A composite material in which a synthetic resin is mixed with a fiber reinforcing material made of carbon fiber, glass fiber, or the like is called fiber reinforced plastic (FRP), and is widely used in housing equipment, transportation equipment, industrial products, and the like. In order to increase the strength of such a composite material, it is important to enhance the impregnation properties of the synthetic resin into the fiber reinforcing material.

As an apparatus for enhancing the impregnation properties, Patent Literature 1 describes an impregnation apparatus for manufacturing sheet molding compound (SMC), which is a sheet-like molding material. The impregnation apparatus is an apparatus for impregnating a fiber reinforcing material with a resin paste containing a thermosetting resin by a conveyor belt holding roll method. In this apparatus, the sheet material in which the fiber reinforcing material is supplied on the resin paste is moved in the horizontal direction and passed between a first roller to a third roller, a total of six rollers, and each guide roller. The two rollers that configure the first roller gently impregnate the fiber reinforcing material with the resin paste. The two rollers that configure the second roller discharge air bubbles from the sheet material. The two rollers that configure the third roller sufficiently impregnate the fiber reinforcing material with the resin paste.

In order to increase the productivity of the impregnation apparatus, the line speed, that is, the feeding speed of the sheet material need to be increased. When increasing the feeding speed of the sheet material, the time for pressing the sheet material with the rollers is shortened. When the time for pressing the sheet material is shortened, the impregnation properties are lowered. In order to maintain the impregnation properties, there is a method of squeezing a large amount of the sheet materials by reducing the distance between the roller and the sheet material at the time of pressing, but there is a problem that the air bubbles are likely to remain inside the sheet material when squeezing a large amount of sheet materials. In addition, in order to maintain the impregnation properties, a method of increasing the number of rollers through which the sheet material passes can be considered, but when increasing the number of rollers, the apparatus itself becomes large and the apparatus installation costs and maintenance and inspection costs increase.

Patent Literature 2 describes an apparatus in which a small-diameter spheres are disposed to line up on the surface of a rotating roll or belt and brought into contact with the sheet material, the sphere sandwiched between the roll or belt and the sheet material presses the sheet material, and the fibers are impregnated with a matrix resin in the sheet material. Patent Literature 3 describes an impregnation apparatus in which a small-diameter impregnation roll group is disposed to line up on the surface of a rotating roll, the sheet material is pressed by the impregnation roll group, and the fibers are impregnated with the matrix resin in the sheet material. However, these impregnation apparatuses do not consider the defoaming effect of discharging air bubbles inside the sheet material. In the configuration described in Patent Literature 2 in which the sphere is not fixed to the surface of the rotating roll or belt, it is difficult to move the sphere at a desired speed. Therefore, it is difficult to obtain a high defoaming effect while ensuring a desired impregnation effect. In the configuration described in Patent Literature 3 in which the revolving direction of the impregnation roll group is the same as the conveying direction of the sheet material, the effect of removing air bubbles in the sheet material is small. Therefore, it is difficult to obtain a high defoaming effect while ensuring a desired impregnation effect.

### Citation List

### Patent Literature

PTL 1: JP-A-2004-099820
PTL 2: JP-A-2-305829
PTL 3: JP-A-7-076017

### Summary of Invention

### Technical Problem

There are provided a sheet material pressing device, a sheet material pressing method, a pressing roller, and a sheet material manufacturing method, which can obtain a high defoaming effect while ensuring a desired impregnation effect. Solution to Problem

According to an aspect of the present invention, there is provided a sheet material pressing device including: a pressing roller having a plurality of free rollers for pressing a sheet material in which resin and fibers are mixed, and a free roller support unit that disposed the plurality of free rollers in an annular shape and fixes and supports the plurality of free rollers so as to rotate freely; a driving control unit that rotates the free roller support unit in a first rotation direction in order to revolve the plurality of free rollers; and a sheet material conveying unit on which the sheet material is placed and conveyed, in which the first rotation direction is a direction in which a moving direction of the free roller at a pressing position of the sheet material is a direction opposite to a conveying direction of the sheet material.

According to such a configuration, the revolution speed of the plurality of free rollers is increased to increase the number of free rollers which are in contact with the sheet material while the sheet material passes through the pressing rollers. Accordingly, the desired impregnation effect can be ensured even in a relatively short time. In addition, the revolving direction of the free roller is a direction in which the free roller at the pressing position of the sheet material is moved in the direction opposite to the sheet material conveying direction. Accordingly, it is possible to obtain the defoaming effect that presses air bubbles inside the sheet material toward the upstream side in the conveying direction of the pressing roller. Moreover, since the defoaming is performed by replacing the air bubbles with the resin, the defoaming enhances the impregnation effect.

In the sheet material pressing device, the free rollers that come into contact with the sheet material at the same time, may be at least two free rollers including a first free roller (151) which is in contact with an upstream side of the sheet material and a second free roller (152, 153) which is in contact with a downstream side of the sheet material, and have a distance between the pressing roller and the sheet material conveying unit, which is set such that a distance (D1) between the first free roller and the sheet material conveying unit is greater than a distance (D2, D3) between the second free roller and the sheet material conveying unit.

The free roller which is in contact with the sheet material freely rotates in the same direction as the conveying direction of the sheet material. The free roller rotates due to friction with the sheet material.

It is preferable that the free rollers disposed in an annular shape with respect to the free roller support unit are disposed to form a perfect circle around the rotating shaft (free roller revolving shaft) of the free roller support unit.

In the sheet material pressing device, there may further be provided a pedestal (18, 28) that is disposed at a position facing the pressing roller and supports the sheet material, and the sheet material may pass between the pressing roller and the pedestal while being pressed by the pressing roller.

In the sheet material pressing device, a distance adjusting unit for adjusting the distance between the free roller at the pressing position and the sheet material conveying unit, may further be provided.

The free roller support unit may have a disk shape.

In the sheet material pressing device, at least two free rollers that come into contact with the sheet material at the same time may be provided, each of surfaces of the at least two free rollers may have a groove formed around a rotating shaft, and in the free rollers disposed adjacent to each other among the at least two free rollers, the grooves may be disposed to be shifted from each other in a direction of the rotating shaft.

In the sheet material pressing device, each of the free rollers may have a groove formed around a rotating shaft, and the groove may be spirally formed around the rotating shaft.

According to a still another aspect of the present invention, there is provided a sheet material pressing method including: adjusting the sheet material pressing device according to specifications of the sheet material, and pressing the sheet material using the adjusted sheet material pressing device.

According still another aspect of the present invention, there is provided a pressing roller including: a plurality of free rollers that press the sheet material; and a support mechanism that disposes the plurality of free rollers in an annular shape and fixes and supports the plurality of free rollers so as to rotate freely, in which in at least at one of the plurality of free rollers, a groove formed around a rotating shaft of each free roller is provided.

In the pressing roller, at least two free rollers at a pressing position may be provided, each of surfaces of the at least two free rollers may have a groove formed around a rotating shaft of each of the free rollers, and in the free rollers disposed adjacent to each other among the at least two free rollers, the grooves may be disposed to be shifted from each other in a direction of the rotating shaft.

In the pressing roller, the groove may be spirally formed around the rotating shaft.

According to still another aspect of the present invention, there is provided a sheet material (for example, SMC) manufacturing method including: a first coating step of coating a first carrier film with a first matrix resin (for example, a first resin paste containing a thermosetting resin) ; a second coating step of coating a second carrier film with a second matrix resin (for example, a second resin paste containing a thermosetting resin); a first deposition step of depositing a reinforcing fiber material (for example, glass fiber) on the first matrix resin coated on the first carrier film; a lamination step of forming a sheet material by laminating the first carrier film and the second carrier film such that the first carrier film, the first matrix resin, the reinforcing fiber material, the second matrix resin, and the second carrier film are disposed in this order after the first deposition step and the second coating step; and a step of impregnating the reinforcing fiber material with the first matrix resin and/or the second matrix resin by using the above-described sheet material pressing device and the above-described pressing roller after the lamination step, and defoaming the sheet material. The impregnation step and the defoaming step are performed simultaneously or partially overlapping.

According to still another aspect of the present invention, there is provided a sheet material (for example, prepreg) manufacturing method including: a step of supplying a resin sheet in which resin is formed on a first carrier film; a step of supplying a carbon fiber sheet including a carbon fiber bundle or a carbon fiber bundle impregnated with resin; and a step of forming the sheet material by laminating the carbon fiber sheet on the resin sheet; and a step of impregnating the carbon fiber bundle with resin contained in the formed sheet material by using the above-described sheet material pressing device and the above-described pressing roller, and defoaming the sheet material. The impregnation step and the defoaming step are performed simultaneously or partially overlapping.

The sheet material conveying unit may be provided exclusively for the sheet material pressing device, or may be shared with a manufacturing device other than the sheet material pressing device.

The driving control unit is configured to control a driving device (configured with a motor, a gear, or the like) for rotationally driving the free roller support unit around the rotating shaft (free roller revolving shaft) . The driving control unit may drive and control the pressing roller and the sheet material conveying unit, respectively. Furthermore, the driving control unit may control the rotation speed of the free roller support unit based on the convey speed of the sheet material conveying.

It is preferable to set the height position of the rotating shaft of the free roller support unit and the conveying position of the sheet material such that at least two free rollers come into contact with the sheet material in a state of being conveyed. It is preferable that the position of the rotating shaft of the free roller support unit is configured such that the position in the height direction can be adjusted. The position in the height direction may be adjusted according to the type of sheet material or the thickness of the sheet material.

The sheet material conveying unit may have an upstream side guide roller and a downstream side guide roller so as to sandwich the free roller support unit in the conveying direction.

### Brief Description of Drawings

FIG. 1 is a schematic view of an SMC manufacturing step including an embodiment of a sheet material pressing device of the present invention.
FIG. 2 is a view illustrating an embodiment of the sheet material pressing device of the present invention.
FIG. 3 is an enlarged sectional view of a main part of the sheet material pressing device of FIG. 2.
FIG. 4 is a view illustrating another embodiment of a pedestal.
FIG. 5 is a view illustrating another embodiment of the sheet material pressing device.

### Description of Embodiments

The present invention will be described in detail with reference to the drawings. In each drawing, the dimensional ratio of the drawings and the actual dimensional ratio do not always match each other, and the dimensional ratios between the drawings do not necessarily match each other.

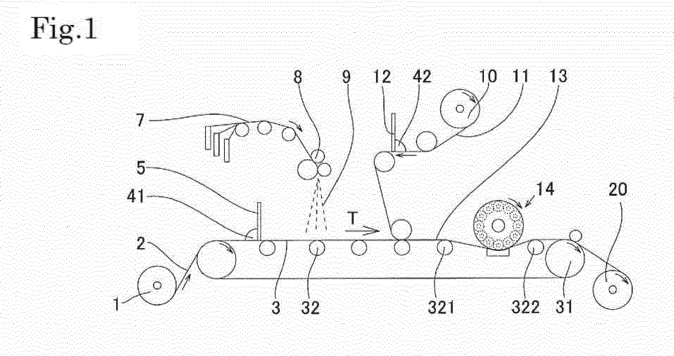

FIG. 1 schematically illustrates a manufacturing step of SMC, which is a sheet-like molding material in which glass fibers are impregnated with a matrix resin. A thermoplastic resin film such as polyethylene or polypropylene having a thickness of 10 to 50 µm drawn out by an unwinding roll 1 is placed on a conveyor belt 3 as a first carrier film 2.

The conveyor belt 3 is driven by a driving roller 31 and conveys the raw material of a sheet material 13 placed on the conveyor belt 3 and the sheet material 13 in a T direction. The driving speed of the driving roller 31 can be changed by control means (not illustrated). A guide roller 32 is appropriately disposed inside the conveyor belt 3. In the present embodiment, a belt conveyor is used as a sheet material conveying unit, but other conveying mechanisms such as a roller conveyor and a chain conveyor may be used.

Next, a first resin paste 41, which is a matrix resin, is coated on the first carrier film 2 to a predetermined thickness by coating means such as doctor 5. The first resin paste 41 is mainly made of a thermosetting resin such as an unsaturated polyester resin or a vinyl ester resin, and may use a paste-like product having a viscosity of approximately 30 to 600 poise by appropriately mixing a filler, a thickener, a curing catalyst, an internal mold release agent, and a shrinkage diminishing agent, a colorant, and the like.

Regarding a reinforcing fiber material 9 to be impregnated with the first resin paste 41, a plurality of bundles of glass strands 7 are sent to a cutting device 8 to form a large number of cut pieces having a length of approximately 1 inch. The formed cut pieces are sprinkled and deposited on the first resin paste 41 so as to be uniformly dispersed, and used as the reinforcing fiber material 9.

A thermoplastic resin film such as a polyethylene film having a thickness of 10 to 50 µm drawn out by the unwinding roll 1 is used as a second carrier film 11. A second resin paste 42 is coated on the second carrier film 11 to a predetermined thickness by coating means such as a doctor 12. The second carrier film 11 coated with the second resin paste 42 is laminated on the reinforcing fiber material 9 deposited on the first carrier film 2 such that the second resin paste 42 is on the inside, and the sheet material 13 is formed.

Immediately after formation, the sheet material 13 is in a state where the resin pastes 41 and 42 and the reinforcing fiber material 9 are mixed between the first carrier film 2 and the second carrier film 11. However, the resin pastes 41 and 42 are not completely impregnated in the reinforcing fiber material 9, and many air bubbles remain inside the sheet material 13. The sheet material pressing device 14 is used to impregnate the reinforcing fiber material 9 with the resin pastes 41 and 42, and to discharge the air bubbles contained inside the sheet material 13. The sheet material 13 pressed by the sheet material pressing device 14 is wound to form a winding roll 20.

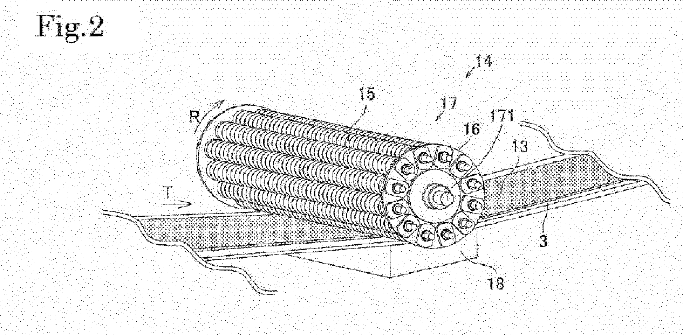

An embodiment of the sheet material pressing device according to the present invention will be described with reference to FIG. 2. FIG. 2 is a perspective view of the sheet material pressing device 14. The sheet material pressing device 14 includes a conveyor belt 3, a pressing roller 17, and a driving control unit (not illustrated) that drives and controls the pressing roller 17 and the conveyor belt 3, respectively. In this drawing, the sheet material 13 (hatching region) placed on the conveyor belt 3 is illustrated together with the sheet material pressing device 14. In the present embodiment, the conveyor belt 3 is shared with the manufacturing method other than the sheet material pressing device 14, but the conveyor belt 3 may be provided exclusively for the sheet material pressing device.

The pressing roller 17 includes a plurality of free rollers 15 for pressing the sheet material 13 and a pair of free roller support units 16 that disposes the plurality of free rollers 15 in an annular shape and fixes and supports the plurality of free rollers 15 so as to freely rotate. The plurality of free rollers 15 are attached and fixed between the pair of free roller support units 16. Each free roller 15 rotates due to friction with the sheet material 13 which is in contact with the free roller 15. The plurality of free rollers 15 rotate (revolve) in a first rotation direction R around the rotating shaft 171 of the pressing roller 17. This rotation is performed by a driving control unit (not illustrated). Each free roller 15 revolves according to the rotation of the free roller support unit 16 and moves from the downstream side to the upstream side of the sheet material 13 in the conveying direction T while applying a pressing force to the sheet material 13.

The driving control unit includes a driving device and a control unit. The driving device includes a motor, gears, and the like, and various driving sources such as an air motor and an electric motor can be applied to the motor depending on the driving target. In order to rotate the pressing roller 17, for example, it is preferable to use an air motor. The control unit may be provided for each driving unit, may be integrated with the pressing device as a whole, or may be integrated with other devices used in the SMC manufacturing step.

The sheet material 13 to which the pressing force is applied by the free roller 15 is impregnated with the resin pastes 41 and 42 inside the sheet material 13 into the reinforcing fiber material 9. Since the free roller 15 revolves, the sheet material 13 is pressed by the plurality of free rollers 15. As the revolution speed of the pressing roller 17 increases, the number of free rollers 15 pressing the sheet material 13 increases. Accordingly, the number of times of pressing by the free roller 15 and the pressing time increase, and the impregnation properties are improved. Since the revolution speed of the pressing roller 17 can be set independently of the line speed, a desired impregnation properties can be obtained even in a case where the line speed increased. Furthermore, since the pressing roller 17 saves space as compared with respectively preparing and using rollers having different effects, the size of the sheet material pressing device 14 can be reduced.

The first rotation direction R of the pressing roller 17 is a direction in which the free roller 15 which is at the pressing position of the sheet material 13, that is, the free roller 15 which is in contact with the sheet material 13 is moved in a direction opposite to the conveying direction T of the sheet material 13 by the conveyor belt 3. When the pressing roller 17 is rotated in the first rotation direction R, the free roller 15 moves to the upstream side in the conveying direction while pressing the sheet material 13 one after another. Accordingly, the air bubbles existing inside the sheet material 13 are pressed upstream in the conveying direction of the pressing roller 17 and defoam.

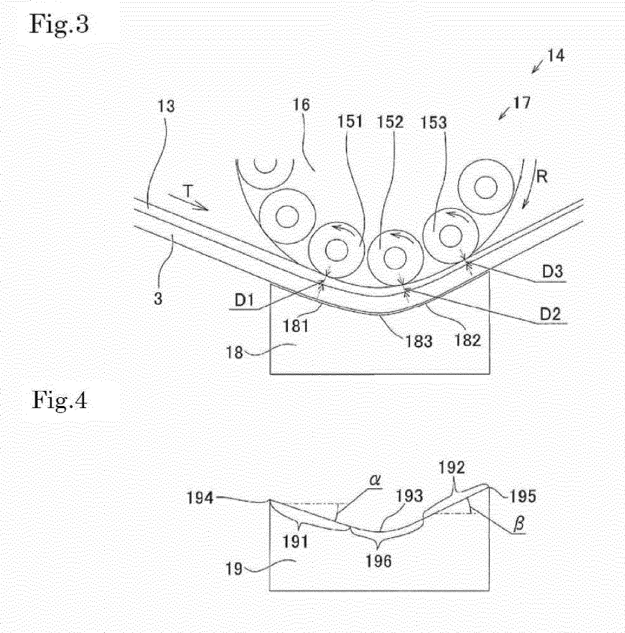

FIG. 3 is an enlarged sectional view of a main part of the sheet material pressing device 14 with a plane along the sheet material conveying direction as a cross section. In FIG. 3, three free rollers 15 are in contact with the sheet material 13 at the same time. The three free rollers 15 are a first free roller 151, a second free roller 152, and a third free roller 153 in this order from the upstream side, which is the sending side of the sheet material 13. A distance D1 between the first free roller 151 and the conveyor belt 3 is set to be greater than a distance D2 between the second free roller 152 and the conveyor belt 3. The distance D2 between the second free roller 152 and the conveyor belt 3 is set to be greater than a distance D3 between the third free roller 153 and the conveyor belt 3. This distance setting is intended to gradually increase the pressing amount of the sheet material 13 by reducing the distance between the free roller and the conveyor belt toward the downstream.

By setting the distances D1 to D3 in this manner, the following effects can be obtained. The first free roller 151, which has a small pressing amount, exhibits a defoaming effect mainly for discharging the air bubbles contained in the sheet material. The third free roller 153, which has a large pressing amount, mainly exhibits an impregnation effect of impregnating the sheet material after defoaming. The second free roller 152 which is between the first free roller 151 and the third free roller 153 exhibits both a defoaming effect and an impregnation effect. In other words, by gradually performing the pressing, the air bubbles can be pressed to the upstream side of the pressing roller mainly on the upstream side in the conveying direction to promote the defoaming, and the desired impregnation properties can be obtained mainly on the downstream side in the conveying direction.

When the number of free rollers 15 that come into contact with the sheet material 13 at the same time increases, the number of times of pressing the sheet material 13 and the pressing time increase, and the impregnation properties are improved. The number of free rollers 15 that come into contact with the sheet material 13 at the same time varies depending on the shape of the free roller support unit 16, the bendable angle of the sheet material 13, the number of free rollers 15 that can be disposed on the pressing roller 17, and the like.

For example, a case where a pressing roller in which 12 free rollers having a diameter of 38 mm are disposed at equal distances along the circumferential direction of a disk-shaped free roller support unit having a diameter of 200 mm is used, is considered. When the sheet material 13 is disposed along the circumference of the disk of the free roller support unit 16 at 120 degrees (1/3 of the entire circumference), a maximum of five free rollers 15 are in constant contact with the sheet material 13, and the impregnation properties are improved. In a case of using the pressing roller at the same time, when the sheet material 13 is disposed along the circumference of the disk of the free roller support unit at 90 degrees (1/4 of the entire circumference), a maximum of four free rollers are in constant contact with the sheet material 13, and the impregnation properties are improved.

As a method of adjusting the distances D1 to D3 between the first free roller 151 to the third free roller 153 and the conveyor belt 3, there is a method of adjusting the relative position between the pressing roller 17 and the conveyor belt 3 or a method of adjusting the position of a pedestal 18 by using the pedestal that supports the conveyor belt 3 from below.

A method of adjusting the relative positions of the pressing roller 17 and the conveyor belt 3 will be described. When the position of the pressing roller 17 is lowered in FIG. 3, the relative position of the pressing roller 17 with respect to the conveyor belt 3 can be lowered, the number of free rollers 15 which is in contact with the conveyor belt 3 can be increased, or the distance between the free roller 15 and the conveyor belt 3 can be reduced. In order to lower the position of the pressing roller 17, a distance adjusting unit (not illustrated) for adjusting the height of the pressing roller 17 itself may be used.

As the distance adjusting unit for adjusting the height of the pressing roller 17 itself, for example, a pressing roller support unit that pivotally supports the rotating shaft (the revolving shaft of the free roller 15) of the pressing roller 17 from both sides; the driving unit such as a linear actuator of which the position of the pressing roller support unit in the height direction can be changed; and a frame provided with the pressing roller support unit and the linear actuator may be provided. The frame may be installed on a rail, for example, and may be configured to be movable along the conveying direction (or the moving direction of the conveyor belt) of the sheet material.

Even when the position of the conveyor belt 3 is raised, the relative position of the pressing roller 17 with respect to the conveyor belt 3 is lowered. In order to raise the position of the conveyor belt 3, the distance adjusting unit (not illustrated) for adjusting the height of the guide rollers 32 disposed on the upstream side in the conveying direction and the downstream side in the conveying direction of the pressing roller 17 may be used. As the distance adjusting unit for adjusting the height of the guide roller 32, an upstream side guide roller 321 and a downstream side guide roller 322 are provided so as to sandwich the sheet material pressing device 14 in the conveying direction of the sheet material, and the upstream side guide roller 321 and the downstream side guide roller 322 may be configured to be movable up and down, respectively.

For example, the conveyor belt 3 on the downstream side is supported downward by the downstream side guide roller 322 or the like such that the position of the conveyor belt 3 on the downstream side in the conveying direction is higher than the position of the conveyor belt 3 on the upstream side. Accordingly, the distances D2 and D3 between the second free roller 152 and the third free roller 153 on the downstream side in the conveying direction and the conveyor belt 3 can be set to be smaller than the distance D1 between the first free roller 151 on the upstream side in the conveying direction and the conveyor belt 3. The distance D3 between the third free roller 153 and the conveyor belt 3 on the downstream side in the conveying direction can be set to be smaller than the distance D2 between the second free roller 152 on the upstream side in the conveying direction and the conveyor belt 3. The height of the upstream side guide roller 321 may be set to be lower than the height of the downstream side guide roller 322 with the pressing roller 17 sandwiched therebetween and separated by the same distance along the conveying direction.

As a method of adjusting the distance between the free roller 15 and the conveyor belt 3, a method of adjusting the distance between the pressing roller 17 and the upstream side guide roller 321 in the conveying direction and/or the distance between the pressing roller 17 and the downstream side guide roller 322 in the conveying direction is provided. Even when the height of the upstream side guide roller 321 and the height of the downstream side guide roller 322 are the same, for example, it is possible to satisfy D1 > D2 and D1 > D3 by setting the distance from the pressing roller 17 to the upstream side guide roller 321 in the conveying direction to be greater than the distance from the pressing roller 17 to the downstream side guide roller 322 in the conveying direction.

A method of adjusting the position of the pedestal using the pedestal that supports the conveyor belt 3 from below will be described. The pedestal 18 is illustrated in FIGS. 2 and 3. The pedestal 18 supports the sheet material 13 pressed by the free roller 15 from below the conveyor belt 3. Accordingly, the sheet material 13 is reliably pressed against the free roller 15. Conveyor belt support surfaces 181 and 182 of the pedestal 18 may be designed such that the distance between each of the free rollers 151 to 153 positioned at the pressing position of the sheet material 13 and the conveyor belt 3 is set to be a desired value. By using the pedestal 18, it becomes easy to control the sheet material 13 to a desired thickness.

The conveyor belt support surfaces 181 and 182 are designed such that the distance between the free rollers 151 to 153 and the conveyor belt 3 becomes smaller toward the downstream in the conveying direction. FIG. 3 illustrates an example of the pedestal 18 in a case where the free roller support unit has a circular shape. The conveyor belt support surfaces 181 and 182 of the rotating shaft (revolving shaft) of the free roller support unit are formed in a concave shape as a whole, and include a lowest unit 183 between the conveyor belt support surfaces 181 and 182.

FIG. 4 illustrates another embodiment of the pedestal in a case where the free roller support unit has a circular shape. The conveyor belt support surface of the pedestal 19 is divided into three (for example, divided into three equal parts) in the side view in the conveying direction, and includes a first support surface 191, a second support surface 196, and a third support surface 192 in this order from the upstream. The first support surface 191 includes an upstream end 194 at the end, the second support surface 196 includes a lowest unit 193 in the central region, and the third support surface 192 includes a downstream end 195 at the end.

The first support surface 191 is linear in the side view in the conveying direction, and gradually decreases at a first inclination angle α with respect to the installation surface (or horizontal) of the device. The third support surface 192 is linear in the side view in the conveying direction, and gradually increases at a second inclination angle β with respect to the installation surface (or horizontal) of the device. The configuration in which the relationship of |α| < |β| is established may be employed. The second support surface 196 has an arc shape in a side view in the conveying direction, and is smoothly connected to the first support surface 191 and the third support surface 192.

In a case of the relationship of |α| = |β|, when a perpendicular line is drawn toward the conveyor belt 3 through the center of the rotating shaft (revolving shaft of the free roller) of the pressing roller 17, a relationship (that is, a relationship in which the perpendicular line passing through the lowest unit 193 passes through the upstream side in the conveying direction from the center of the rotating shaft (revolving shaft of the free roller) of the pressing roller 17) in which the perpendicular line passes through the downstream side of the lowest unit 193 in the conveying direction may be employed.

The conveyor belt support surface in each embodiment of the pedestal may be formed of a smooth surface having a small friction coefficient or a surface in which rollers and the like are disposed such that the conveyor belt 3 slides well. The distance adjusting unit (not illustrated) for adjusting the height or inclination angle of the conveyor belt support surface of the pedestal 18 (19) may be provided such that the distances D1 to D3 between the pressing roller 17 and the pedestal 18 (19) can be adjusted.

The method of adjusting the relative position of the pressing roller 17 and the conveyor belt 3 and the method of adjusting the position of the pedestal 18 (19) using the pedestal 18 (19) have been described above, but both of these methods are used in combination.

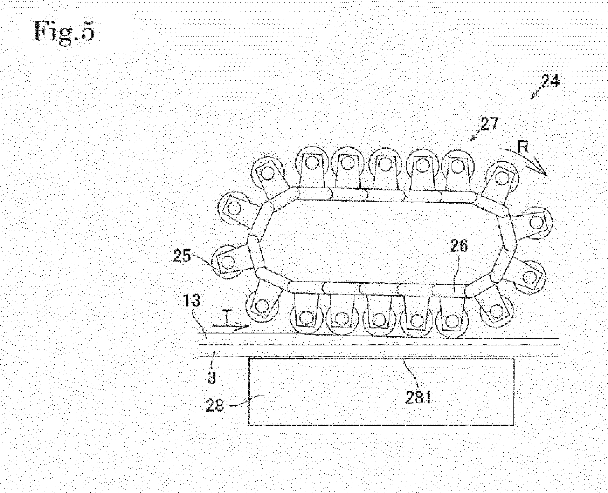

FIG. 5 schematically illustrates a sheet material pressing device of another embodiment. The sheet material pressing device 24 includes a pressing roller 27 in which the free roller support unit 26 is configured with a crawler (endless track). The free roller support unit 26 configured with the crawler can increase the number of free rollers 25 that are in contact with the sheet material 13 at the same time as compared with the disk-shaped free roller support unit 16. In addition, even when the number of free rollers 25 increases, the sheet material 13 to be pressed can also be maintained in a flat surface shape. In the sheet material pressing device 24 of FIG. 5, the support mechanism or the drive control mechanism of the crawler are omitted.

When the number of free rollers 25 which are in contact with the sheet material 13 at the same time increases, the number of times of pressing the sheet material 13 by the free roller 25 and the contact time of the free rollers 25 can increase, and thus, the impregnation properties are further improved. By using a large number of free rollers 25, it is possible to set a "step" when the pressing amount gradually increases in multiple stages. Accordingly, it is possible to further improve the defoaming properties by making it easier to further press the air bubbles upstream in the conveying direction of the pressing roller 27.

In the embodiment of FIG. 5, a pedestal 28 may be provided. The shape of a conveyor belt support surface 281 on the pedestal 28 is adjusted by the distance from the free roller 25 and the track of the crawler. In this embodiment, the conveyor belt support surface 281 may be configured with a flat surface. At this time, the free roller support unit 26 configured with the crawler is inclined from the upstream side to the downstream side so as to approach the conveyor belt support surface 281. Accordingly, even when the conveyor belt support surface 281 is a flat surface, the distance between the free roller and the conveyor belt 3 can be gradually reduced from the upstream side to the downstream side.

The free roller will be described in detail. The material of the free roller is not particularly limited, other than using a metal such as stainless steel. In a case where an elastic material such as an elastomer is used on the surface of the free roller, the effect of smoothing out wrinkles generated on the carrier film on the surface of the sheet material can be obtained.

At least one of the free rollers may have a groove formed around the rotating shaft of the free roller. The groove formed around the rotating shaft of the free roller includes a groove spiraling around the rotating shaft and a groove extending in the direction along the rotating direction. The groove has an effect of inducing the air bubbles inside the sheet material. In a case of the spirally provided groove, there is an effect of moving the air bubbles along the spiral groove. Accordingly, the air bubbles inside the sheet material can be discharged to the outside of the sheet material.

All the free rollers in the pressing roller may have grooves, or a grooved free roller and a grooveless free roller may be mixed. The grooved free roller and the grooveless free roller may be disposed alternately along the circumferential direction of the pressing roller, or the grooved free roller and the grooveless free roller may be disposed every two rollers.

In a case where there are at least two free rollers which are in contact with the sheet material at the same time, when the at least two free rollers are disposed adjacent to each other, the grooves in the free rollers disposed adjacent to each other may be disposed to shifted from each other in the direction of the rotating shaft of the free roller. For example, the concave portion of the groove of one adjacent free roller and the projection portion of the other free roller may be disposed to face each other, or at least a part of the projection portion may be inserted into the concave portion. The free rollers disposed adjacent to each other can alternately press the local regions adjacent to each other on the sheet material. When the local regions on the sheet material are pressed alternately, the matrix resin is moved, and accordingly, the pump function of discharging the air bubbles inside the sheet material to the outside of the sheet material works.

A sheet material pressing method will be described. The above-described sheet material pressing device is adjusted according to the specifications of the sheet material, that is, the material or thickness of the sheet material to be charged, and the target defoaming and impregnation state of the sheet material. The adjustment items of the sheet material pressing device include the rotation speed of the pressing roller, the feeding speed of the sheet material, the distances D1 to D3 between the free roller and the conveyor belt, and the like.

The rotation speed of the pressing roller or the feeding speed of the sheet material are particularly effective parameters for adjusting the impregnation state of the sheet material. The balance of the distances D1 to D3 between the free roller and the conveyor belt is a particularly effective parameter for adjusting the defoaming state of the sheet material. Accordingly, the above-described sheet material pressing device can individually adjust the impregnation effect and the defoaming effect.

The design items of the pressing roller such as the diameter, number, and material of the free rollers, the mechanism or diameter of the free roller support unit also affect the impregnation effect and the defoaming effect. Accordingly, a pressing roller having a suitable design may be selected and added as an adjustment item of the sheet material pressing device that is adjusted according to the specifications of the sheet material. One or more of the pressing rollers or one or more of the sheet material pressing devices may be used.

Examples of the sheet material to be manufactured include SMC and prepreg. In the embodiment, an example is illustrated in which the sheet material pressing device is applied to the manufacturing of SMC and used as a device for defoaming while impregnating the matrix resin with glass fibers. In addition, the embodiment can also be applied to the manufacturing of a prepreg formed by impregnating a matrix resin such as an epoxy resin with carbon fibers as a reinforcing fiber material. For example, as a prepreg using carbon fibers, there is a prepreg in which unidirectional fiber materials called Uni Direction (UD) is impregnated with a matrix resin. In a case of impregnating the UD with resin, it is difficult to defoam in a direction different from the direction in which the fibers are lined up. Therefore, the above-described sheet material pressing device can be used as a defoaming device in which the defoaming effect is particularly emphasized. The impregnation effect can also be obtained by replacing the air bubbles with the resin by defoaming.

The above-described SMC manufacturing method using the sheet material pressing device and the pressing roller, includes: a first coating step of coating the first carrier film 2 with the first resin paste 41 containing a thermosetting resin; a second coating step of coating the second carrier film 11 with the second resin paste containing a thermosetting resin; a first deposition step of depositing glass fibers on the first resin paste coated on the first carrier film in the first coating step; a lamination step of laminating the first carrier film and the second carrier film such that the first carrier film, the first resin paste, the glass fiber, the second resin paste, and the second carrier film are disposed in this order; and a step of impregnating the reinforcing fiber material with the first matrix resin and/or the second matrix resin contained in the formed sheet material, and defoaming the sheet material.

Moreover, between the first deposition step and the lamination step, the method further may include an intermediate coating step of coating the reinforcing fiber material with the same resin as the first or second matrix resins, and an intermediate deposition step of depositing a reinforcing fiber material which is the same as or different from the reinforcing fiber material on the resin coated in the intermediate coating step.

The intermediate coating step and the intermediate deposition step may be combined, and one or two or more of the combinations may be executed.

The first matrix resin and the second matrix resin may be made of the same material or may be made of different materials.

The prepreg manufacturing method using the sheet material pressing device and the pressing roller, includes: a step of supplying a resin sheet in which resin is formed on a first carrier film; a step of supplying a carbon fiber sheet including a carbon fiber bundle or a carbon fiber bundle impregnated with resin; a lamination step of forming the laminated sheet by laminating the carbon fiber sheet on the resin sheet; and a step of impregnating the carbon fiber bundle with resin contained in the formed sheet material by using the above-described pressing roller and the above-described sheet material pressing device, and defoaming the sheet material.

In the present embodiment, the matrix resin, glass fiber, carbon fiber, resin, thermosetting resin, carrier film (including release paper), and the like are not particularly limited as long as these materials are used for the manufacturing of SMC and the manufacturing of prepreg.

The present invention is not limited to the above-described embodiment, and various improvements and changes can be made without departing from the spirit of the present invention.

### Reference Signs List

3: Conveyor belt
9: Reinforcing fiber material
13: Sheet material
14, 24: Sheet material pressing device
15, 25: Free roller
16, 26: Free roller support unit
17, 27: Pressing roller
18, 19, 28: Pedestal
151: First free roller
152: Second free roller
153: Third free roller

## Claims

1. A sheet material pressing device comprising:
a pressing roller having a plurality of free rollers for pressing a sheet material in which resin and fibers are mixed, and a free roller support unit that disposes the plurality of free rollers in an annular shape and fixes and supports the plurality of free rollers so as to rotate freely;
a driving control unit that rotates the free roller support unit in a first rotation direction in order to revolve the plurality of free rollers; and
a sheet material conveying unit on which the sheet material is placed and conveyed, wherein
the first rotation direction is a direction in which a moving direction of the free roller at a pressing position of the sheet material is a direction opposite to a conveying direction of the sheet material.

2. The sheet material pressing device according to claim 1, wherein
the free rollers that come into contact with the sheet material at the same time,
are at least two free rollers including a first free roller which is in contact with an upstream side of the sheet material and a second free roller which is in contact with a downstream side of the sheet material, and
have a distance between the pressing roller and the sheet material conveying unit, which is set such that a distance between the first free roller and the sheet material conveying unit is greater than a distance between the second free roller and the sheet material conveying unit.

3. The sheet material pressing device according to claim 1 or 2, further comprising:
a pedestal that is disposed at a position facing the pressing roller and supports the sheet material, wherein
the sheet material passes between the pressing roller and the pedestal while being pressed by the pressing roller.

4. The sheet material pressing device according to any one of claims 1 to 3, further comprising:
a distance adjusting unit for adjusting the distance between the free roller at the pressing position and the sheet material conveying unit.

5. The sheet material pressing device according to any one of claims 1 to 4, wherein
the free roller support unit has a disk shape.

6. The sheet material pressing device according to any one of claims 1 to 5, wherein
at least two free rollers that come into contact with the sheet material at the same time are provided,
each of surfaces of the at least two free rollers has a groove formed around a rotating shaft, and
in the free rollers disposed adjacent to each other among the at least two free rollers, the grooves are disposed to be shifted from each other in a direction of the rotating shaft.

7. The sheet material pressing device according to any one of claims 1 to 6, wherein
each of the free rollers has a groove formed around a rotating shaft, and
the groove is spirally formed around the rotating shaft.

8. A sheet material pressing method comprising:
adjusting the sheet material pressing device according to any one of claims 1 to 7 according to specifications of the sheet material, and pressing the sheet material using the adjusted sheet material pressing device.

9. A pressing roller comprising:
a plurality of free rollers that press the sheet material; and
a support mechanism that disposes the plurality of free rollers in an annular shape and fixes and supports the plurality of free rollers so as to rotate freely, wherein
in at least one of the plurality of free rollers, a groove formed around a rotating shaft of each free roller is provided.

10. The pressing roller according to claim 9, wherein
at least two free rollers at a pressing position are provided,
each of surfaces of the at least two free rollers has a groove formed around a rotating shaft of each of the free rollers, and
in the free rollers disposed adjacent to each other among the at least two free rollers, the grooves are disposed to be shifted from each other in a direction of the rotating shaft.

11. The pressing roller according to claim 9 or 10, wherein
the groove is spirally formed around the rotating shaft.

12. A sheet material manufacturing method comprising:
a first coating step of coating a first carrier film with a first matrix resin;
a second coating step of coating a second carrier film with a second matrix resin;
a first deposition step of depositing a reinforcing fiber material on the first matrix resin coated on the first carrier film;
a step of forming a sheet material by laminating the first carrier film and the second carrier film such that the first carrier film, the first matrix resin, the reinforcing fiber material, the second matrix resin, and the second carrier film are disposed in this order after the first deposition step and the second coating step; and
a step of impregnating the reinforcing fiber material with the first matrix resin and/or the second matrix resin contained in the formed sheet material and defoaming the sheet material, by using the sheet material pressing device according to any one of claims 1 to 7 or the pressing roller according to any one of claims 9 to 11.

13. A sheet material manufacturing method comprising:
a step of supplying a resin sheet in which resin is formed on a first carrier film;
a step of supplying a carbon fiber sheet including a carbon fiber bundle or a carbon fiber bundle impregnated with resin;
a step of forming a sheet material by laminating the carbon fiber sheet on the resin sheet; and
a step of impregnating the carbon fiber bundle with resin contained in the formed sheet material and defoaming the sheet material, by using the sheet material pressing device according to any one of claims 1 to 7 and the pressing roller according to any one of claims 9 to 11.
